(19) Europäisches Patentamt

European Patent Office

Office européen des brevets

(11) EP 0 766 993 B1

(12) **EUROPEAN PATENT SPECIFICATION**

(45) Date of publication and mention
of the grant of the patent:
**26.03.2003 Bulletin 2003/13**

(51) Int Cl.[7]: **B01D 53/94**, B01D 46/24,
B01J 35/04, B01J 37/02,
B01D 39/20, F01N 3/02

(21) Application number: **96115321.0**

(22) Date of filing: **24.09.1996**

(54) **Filter for purifying exhaust gases**

Filter zur Reinigung von Abgasen

Filtre pour purifier des gaz d'échappement

(84) Designated Contracting States:
**DE FR GB**

(30) Priority: **02.10.1995 JP 25521695**

(43) Date of publication of application:
**09.04.1997 Bulletin 1997/15**

(73) Proprietor: **TOYOTA JIDOSHA KABUSHIKI
KAISHA
Aichi-ken 471-8571 (JP)**

(72) Inventors:
• **Araki, Yasushi
Toyota-shi, Aichi-ken 471 (JP)**
• **Mizuno, Tatsuji
Toyota-shi, Aichi-ken 471 (JP)**

(74) Representative: **Winter, Brandl & Partner
Patent- und Rechtsanwaltskanzlei
Alois-Steinecker-Strasse 22
85354 Freising (DE)**

(56) References cited:
EP-A- 0 277 012      EP-A- 0 467 147
EP-A- 0 590 814      EP-A- 0 606 071
EP-A- 0 730 901      EP-A- 0 736 503
DE-A- 3 816 893      US-A- 5 492 679

• DATABASE WPI Section Ch, Week 8603 Derwent
Publications Ltd., London, GB; Class J01, AN
86-016472 XP002026351 & JP 60 238 152 A
(TOYOTA JIDOSHA KK) , 27 November 1985
• DATABASE WPI Section Ch, Week 8618 Derwent
Publications Ltd., London, GB; Class J01, AN
86-116553 XP002026352 & JP 61 057 223 A
(TOYOTA JIDOSHA KK) , 24 March 1986

Remarks:
The file contains technical information submitted
after the application was filed and not included in this
specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a filter for purifying exhaust gases. More specifically, the invention relates to a wall-flow type filter for purifying exhaust gases by trapping and treating particulates contained in the exhaust gases emitted from a diesel engine or the like engine, wherein a catalyst is carried on the pore surfaces inside the porous walls, and the particulates are burned in the pores and are removed.

2. Description of the Prior Art

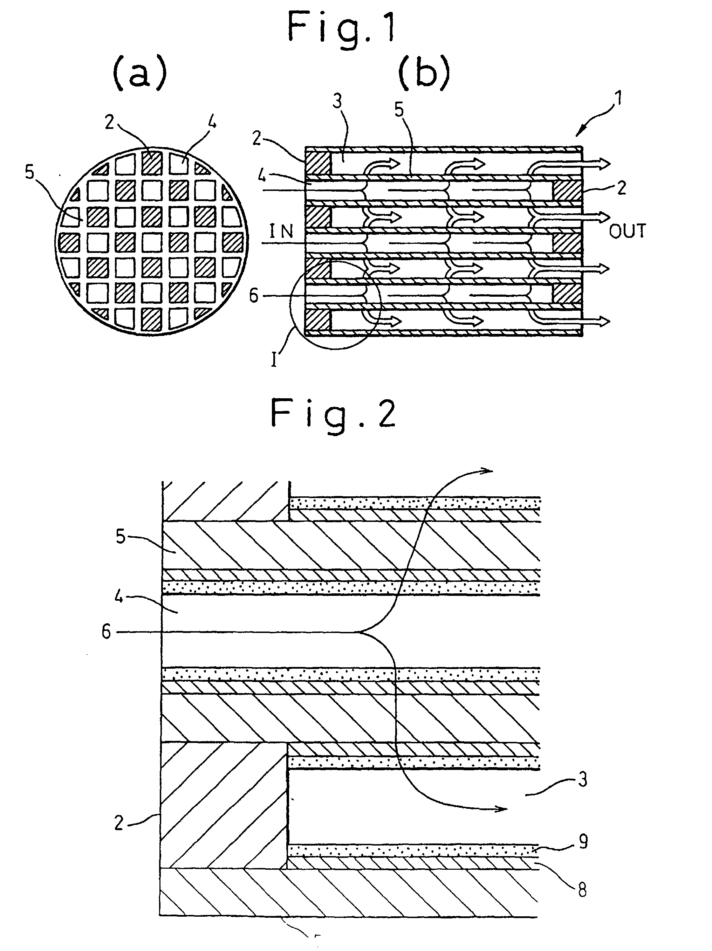

Nitrogen oxides (NOx) and particulates contained in the exhaust gases emitted from a diesel engine produce environmental pollution. The particulates are fine particle-like substances consisting chiefly of solid fine carbon particles (SOOT) and soluble organic fractions (SOF). A wall-flow type filter 1 shown in Figs. 1a and 1b has now been generally used as means for treating the particulates. The filter has a number of cells (through holes) of which the ends on one side are plugged with a plug 2 alternatingly; i.e., the cells 3 which are plugged at the inlets of exhaust gases are opened at the outlets and, conversely, the cells 4 which are opened at the inlets are plugged at the outlets. The porous walls 5 among the neighboring cells have fine pores that permit the passage of exhaust gases but do not permit the passage of particulates.

The exhaust gases flow into the filter of a structure as shown in Fig. 1b, and the exhaust gases 6 that flow into the cells 4 of the exhaust gas inlet side of which the inlets are open, necessarily pass through the porous walls 5. Therefore, the particulates are trapped on the porous walls of the cells of the exhaust gas inlet side. The trapped particulates are ignited and burned after being heated by a heater or are allowed to burn spontaneously due to the action of the catalyst carried by the filter, and are thus removed.

So far, the filter for purifying exhaust gases by spontaneously burning the particulates by the action of the catalyst carried by the filter was of the structure in which, as shown in Fig. 2, a coating layer 8 was formed on the inner surfaces of cells of the filter body 7, and the catalyst 9 was carried on the coating layer 8. Japanese Unexamined Patent Publication (Kokai) No. 59-211708 discloses a filter in which the catalyst is carried on the porous wall surfaces only of the cells of the exhaust gas inlet side but the catalyst is not carried by the porous wall surfaces of the cells of the exhaust gas outlet side.

With the above-mentioned filter, the particulates are burned on the porous wall surfaces of the cells relying upon the catalytic action. On these surfaces, however, the heat of combustion of the particulates tends to be easily emitted, and the combustion is not favorably sustained. Therefore, the particulates flow into the cells in amounts larger than the amounts of particulates removed by combustion and, hence, the particulates accumulate on the porous wall surfaces. The particulates that have deposited do not come into contact with the catalyst and are not removed by the action of the catalyst. As the particulates gradually deposit as described above, the exhaust gases cannot pass through the porous walls. Therefore, the pressure loss of the filter increases and the filter becomes no longer usable. Besides, the catalyst carried on the surfaces only of the porous walls is not sufficient, and the catalytic action is not satisfactory, either.

The EP-A-0277012 describes a wall flow filter having cells alternatively open and closed at in- or outlet side and delimited by porous partition walls, which have a porous coating of ceramic material which carries a catalytic material.

The EP-A-0590814 describes a filter having a catalyst carried in the pores of the walls and teaches that particles should not pass therethrough.

The object of the present invention is to provide a wall-flow type filter for purifying exhaust gases, which is capable of burning the particulates inside the porous wall to efficiently treat the particulates.

SUMMARY OF THE INVENTION

In order to accomplish the above-mentioned object according to claim 1, there is provided a wall-flow type filter for purifying exhaust gases having a number of cells formed in a direction of flow of exhaust gases, wherein every other cell is plugged on the exhaust gas inlet side but are opened on the exhaust gas outlet side, and the cells that are opened on the exhaust gas inlet side are plugged on the exhaust gas outlet side, and wherein a catalyst is carried in the pores formed in side the porous walls among the cells and the pores have a diameter of from about 25 to about 40 $\mu$m.

The filter for purifying exhaust gases has a catalyst carried on the pore surfaces in side the porous walls of the filter, and the particulates that flow into the pores burn upon reacting with $NO_2$ in the exhaust gases on the catalyst in the pores. The filter material has a low heat transfer property. Besides, since a field of combustion of particulates is formed in nearly closed spaces called pores, the heat of combustion is confined in the pores and promotes the combustion of particulates. Thus, the particulates burn efficiently and flow into the pores and are removed by burning before they are deposited on the porous wall surfaces of the cells on the exhaust gas inlet side. Accordingly, the particulates do not deposit and the pressure loss does not increase.

According to a second aspect of the present invention which is concerned with a wall-flow type filter for purifying exhaust gases of the first aspect, the diameter of the pores decreases from the exhaust gas inlet side toward the exhaust gas outlet side in the direction of thickness of the porous walls. In this filter for purifying exhaust gases, the diameter of the pores in the porous walls is made smaller toward the exhaust gas outlet side than on the exhaust gas inlet side in the direction of thickness of the porous walls, so that the particulates flow easily into the pores and further flow up to the exhaust gas outlets in the porous walls. This makes it possible to more reliably form a field of combustion of the particulates in the pores. Besides, since the particulates can be introduced up to the exhaust gas outlet side in the porous walls, a margin is formed in the pore space and particulates are prevented from being deposited on the porous wall surfaces of the cells on the exhaust gas inlet side.

According to a third aspect of the present invention which is concerned with a filter for purifying exhaust gases of the first or the second aspect, the amount of the carrier increases from the exhaust gas inlet side toward the exhaust gas outlet side in the direction of thickness of the porous walls. In this filter for purifying exhaust gases, the amount of catalyst in the pores in the porous walls on the exhaust gas outlet side is larger than that of the inlet side, enabling the particulates accumulated on the outlet side to be quickly and reliably burned. In the filter for purifying exhaust gases of the second aspect, in particular, the particulates tend to accumulate on the outlet side. Therefore, it is desired to increase the amount of the catalyst on the outlet side.

According to a fourth aspect of the present invention which is concerned with a filter for purifying exhaust gases of any one of the first to third aspect, an $NO_x$-absorbing material that releases $NO_x$ components absorbed in the form of $NO_2$ at a temperature higher than a predetermined temperature, is carried in the pores. With the filter for purifying exhaust gases carrying the $NO_x$-absorbing material, NO and $NO_2$ that do not contribute to the burning of particulates at low temperatures are absorbed by the $NO_x$-absorbing material. As the temperature rises accompanying the burning of particulates in the pores, the NO and $NO_2$ that are absorbed are released as $NO_2$ and react with the particulates with an increased probability contributing to enhancing combustion of the particulates. With the $NO_x$-absorbing material being carried in the pores which are fields for burning the particulates, furthermore, the rise in the temperature due to the burning of particulates promotes the burning of $NO_2$ which further accelerates the burning of particulates. The $NO_x$-absorbing material further promotes the change of NO, that is formed by burning, into $NO_2$.

According to a fifth aspect of the present invention which is concerned with a filter for purifying exhaust gases of any one of the first to fourth aspect, furthermore, an HC-adsorbing material that releases the adsorbed HC at a temperature higher than a predetermined temperature is applied to the pores near the exhaust gas inlets in the direction of thickness of the porous walls or onto the porous wall surfaces in the cells on the exhaust gas inlet side. In this filter for purifying exhaust gases, HC is adsorbed by the HC-adsorbing material at low temperatures and is released as the temperature rises due to the burning of the particulates. The HC that is released burns upon the action of the catalyst in the pores and raises the temperature in the pores to promote the burning of the particulates. With the HC-adsorbing material being directly disposed on the filter, the HC can be adsorbed or released depending upon a change in the temperature based upon the burning of the particulates.

According to a sixth aspect of the present invention which is concerned with a filter for purifying exhaust gases of any one of the first to fifth aspects, an oxidizing catalyst is carried on the porous wall surfaces of the cells on the exhaust gas outlet side. In this filter for purifying exhaust gases of the present invention, the thickness of the coating layer for carrying the catalyst must be decreased so that the particulates are allowed to flow into the pores. As a result, the total amount of the catalyst becomes small, and the ability for oxidizing HC tends to become insufficient. In the filter for purifying exhaust gases, therefore, the above-mentioned problem is solved by carrying an oxidizing catalyst on the porous wall surfaces of the cells on the side of the exhaust gas outlets. Besides, the particulates deposit in the pores on the exhaust gas outlet side. Here, however, since the oxidizing catalyst is carried on the porous wall surfaces of the cells on the exhaust gas outlet side, the particulates do not deposit and the probability of contact between the HC and the oxidizing catalyst does not decrease. Therefore, activity of the catalyst is maintained due to the transfer of heat stemming from the burning of the particulates.

BRIEF DESCRIPTION OF THE DRAWINGS

Fig. 1 is a diagram schematically illustrating the structure of a wall-flow type filter for purifying exhaust gases according to the present invention, wherein Fig. 1a is a front view of the filter and Fig. 1b is a sectional view of the filter in a direction in which the gases flow in;
Fig. 2 is a diagram illustrating a portion I of Fig. 1 on an enlarged scale;
Fig. 3 is a sectional view of an apparatus for forming a coating layer for carrying a catalyst in the pores of the wall-flow type filter;
Fig. 4 is a diagram schematically illustrating in cross section the porous wall of the wall-flow type filter for purifying exhaust gases;
Fig. 5 is a diagram schematically illustrating in cross section the porous wall of the wall-flow type filter for purifying exhaust gases having a coating layer for carrying a catalyst;

Fig. 6 is a diagram schematically illustrating in cross section the porous wall of the wall-flow type filter for purifying exhaust gases having a catalyst carried in the pores; and

Fig. 7 is a diagram schematically illustrating in cross section the porous wall of the wall-flow type filter having an HC-adsorbing material disposed thereon and having a catalyst in the pores thereof.

DETAILED DESCRIPTION OF THE INVENTION

An embodiment of the present invention will now be described with reference to the accompanying drawings.

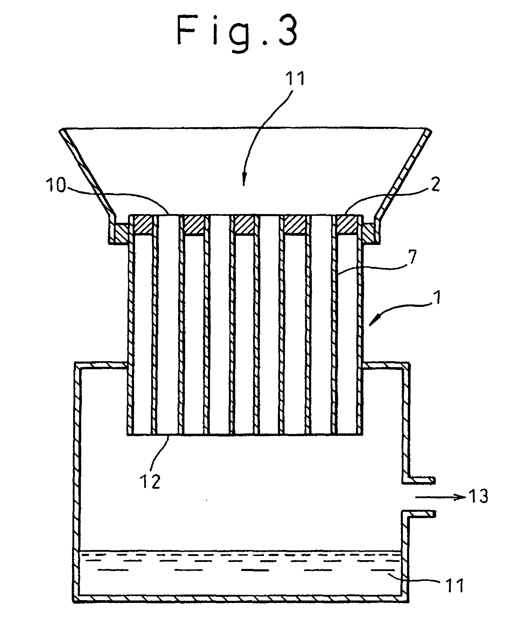

The wall-flow type exhaust gas filter of the present invention is produced as described below. By using a coating apparatus as shown in Fig. 3, first, the filter is coated with a layer for carrying a catalyst. In Fig. 3, reference numeral 1 denotes a wall-flow type filter of cordierite having a porous volume of from 0.58 to 0.65 cc/g and an average porous diameter of from 25 to 35 μm. In the present invention, the wall-flow type filter is used for filtering exhaust gases at high temperatures emitted from, for example, automobiles, and the material for forming the filter may be a heat-resistant one that is capable of withstanding exhaust gases of high temperatures and that has heretofore been used. Examples include, in addition to cordierite, ceramics such as alumina, silica, titania, zirconia, silica-alumina, alumina-zirconia, alumina-titania, silica-titania, silica-zirconia, titania-zirconia, mullite and the like.

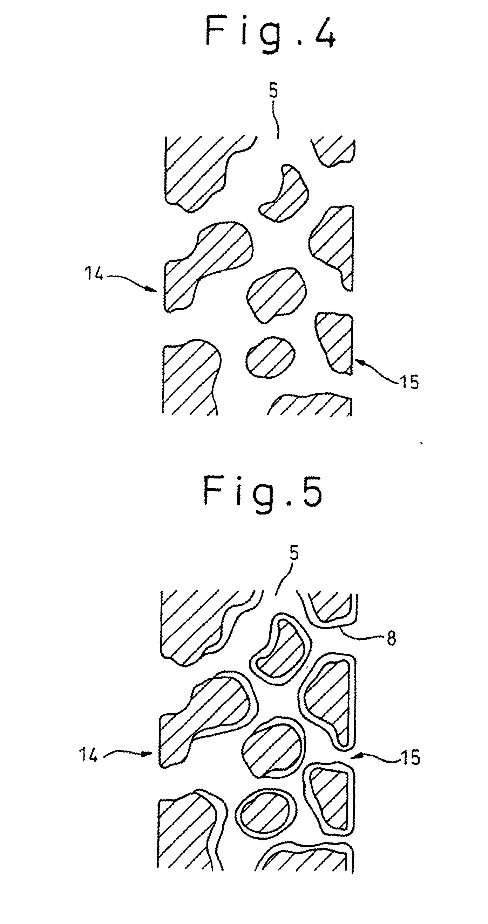

The filter may have any shape and any size depending upon the use and purpose. The wall-flow type filter has many cells in a direction in which the exhaust gases flow, and the porous walls among the cells contain a number of very small pores of sizes which permit exhaust gases to pass through as shown in Fig. 4. In the wall-flow type filter that has heretofore been used, particulates are filtered on the porous walls 14 of the cells of the exhaust gas inlet side and the pores have such a size that does not permit the passage of particulates. According to the present invention, the particulates are introduced into the pores, and a field for burning the particulates is established in the pores. Therefore, the pores have a size that permits the particulates to flow in. Concretely speaking, the particulates have an average particle diameter of from 10 to 30 nm and are usually linked together like a straight chain. Therefore the pores have a size larger than the particulates and have a diameter of from about 25 to about 40 μm. Besides, the pores communicate with one another through narrow passages. Therefore, even when the pores are considerably large, the particulates are trapped in the passages and usually do not pass through the porous walls. In order to introduce as much of the particulates as possible into the pores, furthermore, it is desired that the pores have a large size on the exhaust gas inlet side and have a small size on the exhaust gas outlet side.

In order to maintain pores of a sufficiently large size as described above, it becomes necessary to form the layer as thin as possible. For this purpose, the layer is coated as mentioned below. First, the cells are alternatingly plugged with a plug 2 at the exhaust gas outlet ends 10 only of the wall-flow type filter 1. Then, as shown in Fig. 3, the filter is so disposed that the plugged exhaust gas outlet ends 10 are on the upper side in the vertical direction, and a coating solution 11 is permitted to flow through the cells that have not been plugged among the exhaust gas outlet ends 10. The coating solution 11 may be an alumina having a viscosity of not larger than 100 cps. In addition to the alumina, the coating solution may be a ceramic solution that is usually used for carrying catalyst and that is porous and has a large surface area, such as silica, titania, titania-alumina, titania-silica, etc.

Most of the coating solution flows out from the lower ends of the cells since the exhaust gas inlet ends 12 of the cells have not been plugged. As shown in Fig. 5, however, the coating solution 11 flowing down along the porous walls of the cells permeates into the porous walls 7 toward the exhaust gas inlet side from the exhaust gas outlet side 15 in the direction of thickness of the porous walls due to capillarity, thereby to cover the pore surfaces in the porous walls. In forming such a coating layer, it is important that the coating solution permeates into the pores due to capillarity by suitably adjusting the conditions such as pore size of the filter, specific gravity of the coating solution, solid content, viscosity, etc. through they may vary depending upon the embodiment. It is, however, important that the coating layer does not clog the pores so as to hinder the passage of exhaust gases or to hinder the introduction of the particulates. Referring to Fig. 3, furthermore, the coating solution may be sucked through a port 13 by using a pump (not shown) in order to promote the permeation of the coating solution.

According to this coating method, the coating layer is formed by causing the coating solution 11 to permeate into the porous walls from the exhaust gas outlet side. Therefore, the thickness of the coating layer in the pores in the porous walls on the exhaust gas outlet side can be easily rendered to be larger than the thickness of the coating layer in the pores on the exhaust gas inlet side. As a result, the size of the pores in the porous walls on the exhaust gas outlet side is easily rendered to be smaller than the size of the pores on the exhaust gas inlet side. That is, the particulates are allowed to easily flow into the pores yet being prevented from passing therethrough. Moreover, all the pores can be uniformly coated with the layer. Since the coating layer is formed by causing the coating solution to permeate from the exhaust gas outlet side of the porous walls, the pores in the porous walls on the exhaust gas inlet side are prevented from being clogged with the coating layer.

After the coating layer is formed as described above, the filter 1 is removed from the apparatus, and the cells of which the exhaust gas outlet ends have not been clogged are then clogged at the exhaust gas inlet ends. The filter is then dried and fired in a customary manner.

Then, the coating layer is uniformly formed on the surfaces of the pores in the porous walls of the wall-flow type filter and a catalyst is carried thereon. Thus, the catalyst is carried on the surfaces of the pores. The catalyst may be a noble metal that is usually used, such as platinum, palladium, rhodium, etc. The catalyst is carried according to a customary manner; i.e., the filter is immersed in a slurry which contains the catalyst, followed by drying and firing. It is desired that the catalyst is carried in a manner of allowing a slurry that contains the catalyst to flow from the exhaust gas inlet ends of the filter on which the coating layer is formed. As shown in Fig. 5, the coating layer 11 is hardly formed on the filter on the exhaust gas inlet side 14. When the slurry containing the catalyst is caused to permeate from the exhaust gas inlet side 14, therefore, the catalyst is hardly carried near the exhaust gas inlet side and most of it is carried inside the pores.

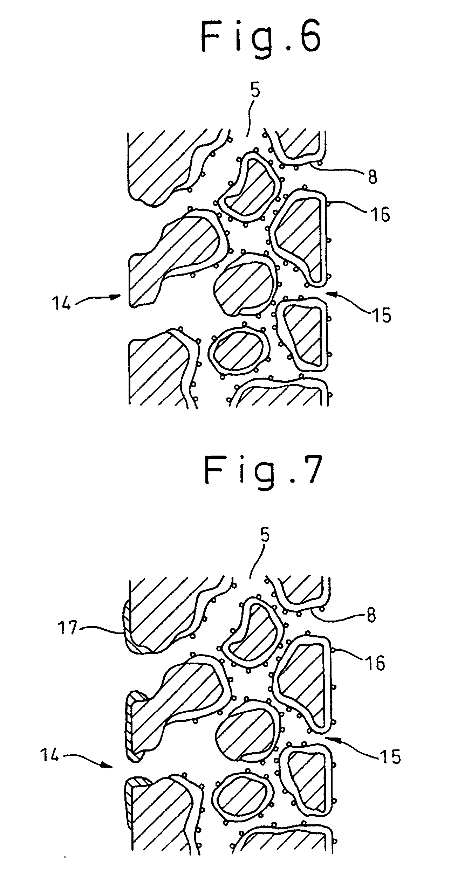

When the coating layer for carrying the catalyst is uniformalized in the pores, the catalyst can be uniformly carried in the pores, too. With the coating layer being formed more thickly on the exhaust gas outlet side than on the exhaust gas inlet side, the catalyst 16 can be carried more on the exhaust gas outlet side than on the exhaust gas inlet side as shown in Fig. 6. In such a filter, the average porous diameter on the outlet side becomes smaller than that of the inlet side due to a difference in the amount of coating, and the particulates start clogging the portions having small porous diameters. These portions, however, have an increased amount of catalyst, and partial clogging by particulates and the combustion thereof are repeated enabling the filter to be used while maintaining the state of low pressure loss by not being clogged.

After the catalyst is carried as described above, the NOx-absorbing material may be carried on the coating layer. The NOx-absorbing material stands for the one that absorbs NO and $NO_2$ at low temperatures of about 250°C but releases $NO_2$ as the temperature rises with 350°C as a peak. As the NOx-absorbing material, there can be used, for example, an alkali metal or an alkaline earth metal. Among them, Na and Li are preferred. At low temperatures, NO and NOx do not take part in the combustion of the particulates. As the temperature rises and exceeds, for example, 400°C, the particulates burn on the filter as represented by the following formulas,

$$NO + 1/2O_2 \rightarrow NO_2$$

$$NO_2 + C \rightarrow NO + CO$$

or

$$N + CO_2$$

With the NOx-absorbing material being disposed in the pores, therefore, $NO_2$ is released at a required timing due to the heat of local combustion of the particulates in the pores during the moment of a high temperature in which $NO_2$ takes part in the combustion of the particulates, whereby the combustion of the particulates is further promoted.

The exhaust gases contain HC. It has been known that HC burns due to the catalytic action as represented by the following formula,

$$HC + O_2 \rightarrow CO_2 + H_2O$$

and the heat generated by the combustion of HC can be utilized for burning the particulates. As shown in Fig. 7, therefore, the porous walls are coated near the exhaust gas inlets thereof with an HC-absorbing material which adsorbs HC at low temperatures at which the particulates do not burn and releases HC when the temperature becomes high. As the temperature rises due to the burning of the particulates, therefore, HC that had been adsorbed is released. The thus released HC enters into the pores and burns near the particulates and promotes the burning of the particulates. As the HC-adsorbing material, there can be used zeolite, mordenite, sepiolite or the like. The HC-adsorbing material is disposed not in the pores but near the exhaust gas inlets of the pores in order to prevent the HC from flowing toward the downstream side without being burned and to reliably burn the HC in the pores.

In the filter for purifying exhaust gases of the present invention, the particulates are introduced into the pores and are burned in the pores. It is therefore essential that the coated layer for carrying catalyst does not clog the pores. According to the present invention, therefore, the thickness of the coated layer is decreased compared with that of the conventional filters in which the coating layer is formed on the surfaces of the porous walls to carry the catalyst. In the conventional filters, the amount of coating is, for example, 65 g/liter. According to the present invention, on the other hand, the amount of coating is about 33 g/liter. When the amount of coating is so small, the total amount of catalyst that is carried decreases. Accordingly, HC in the exhaust gases cannot often be oxidized to a sufficient degree and the ability for cleaning HC often decreases. In order to solve such a problem, it is desired to carry the oxidizing catalyst separately from the field for burning the particulates.

However, there arises a problem in that sulfate is generated when the oxidizing catalyst is carried. However, HC is oxidized relatively faster than the oxidation of $SO_2$. By suitably selecting the SV (space velocity) of exhaust gases passing through the filters, therefore, it becomes possible to suppress formation of sulfate and to remove HC. An experiment showed that the space velocity must be not smaller than 150,000/hr$^{-1}$. Therefore, if the oxidizing catalyst is carried from the downstream of the filter over a length L that realizes this space velocity, it becomes possible to accomplish the above object, i.e., to suppress the formation of sulfate and to remove HC.

In the filter for purifying exhaust gases of the present invention, the catalyst is uniformly carried on the surfaces of the pores in the porous walls of the filter, and the particulates are burned in the pores and are removed. The particulates are thus efficiently treated. The particulates do not deposit and pressure loss in the filter hardly increases.

## Claims

1. A wall-flow type filter for purifying exhaust gases having a number of cells formed in a direction of flow of exhaust gases, wherein every other cell is plugged on the exhaust gas inlet side but is opened on the exhaust gas outlet side and the cells that are opened on the exhaust gas inlet side are plugged on the exhaust gas outlet side, and wherein a catalyst is carried in the pores formed in side the porous walls between the cells and the pores have a diameter of from about 25 to about 40 $\mu$m.

2. A wall-flow type filter for purifying exhaust gases according to claim 1, wherein the diameter of the pores decreases from the exhaust gas inlet side toward the exhaust gas outlet side in the direction of thickness of the porous walls.

3. A wall-flow type filter for purifying exhaust gases according to claim 1 or 2, wherein the amount of the carrier increases from the exhaust gas inlet side toward the exhaust gas outlet side in the direction of thickness of the porous walls.

4. A filter for purifying exhaust gases according to any of claims 1 to 3, wherein an NO$_X$ absorbing material that releases NO$_X$ components absorbed in the form of NO$_2$ at a temperature higher than a predetermined temperature, is carried in said pores.

5. A wall-flow type filter for purifying exhaust gases according to any one of claims 1 to 4, wherein an HC-adsorbing material that releases the adsorbed HC at a temperature higher than a predetermined temperature is applied to the pores near the exhaust gas inlets in the direction of thickness of the porous walls or onto the porous wall surfaces in the cells on the exhaust gas inlet side.

6. A wall-flow typ filter for purifying exhaust gases according to any one of claims 1 to 5, wherein an oxidizing catalyst is carried on the porous wall surfaces of the cells on the exhaust gas outlet side.

## Revendications

1. Filtre du type à écoulement sur parois destiné à purifier des gaz d'échappement, comportant un certain nombre de cellules formées dans le sens de l'écoulement des gaz d'échappement, dans lequel une cellule sur deux est bouchée du côté de l'entrée des gaz d'échappement mais est ouverte du côté de la sortie des gaz d'échappement et les cellules qui sont ouvertes du côté de l'entrée des gaz d'échappement sont bouchées du côté de la sortie des gaz d'échappement et dans lequel un catalyseur est supporté dans les pores formés à l'intérieur des parois poreuses entre les cellules, les pores présentant un diamètre allant d'environ 25 à environ 40 $\mu$m.

2. Filtre du type à écoulement sur parois destiné à purifier des gaz d'échappement selon la revendication 1, dans lequel le diamètre des pores diminue depuis le côté de l'entrée des gaz d'échappement vers le côté de la sortie des gaz d'échappement dans le sens de l'épaisseur des parois poureuses.

3. Filtre du type à écoulement sur parois destiné à purifier des gaz d'échappement selon la revendication 1 ou 2, dans lequel la quantité de support augmente depuis le côté de l'entrée des gaz d'échappement vers le côté de la sortie des gaz d'échappement dans le sens de l'épaisseur des parois poreuses.

4. , Filtre destiné à purifier des gaz d'échappement selon l'une quelconque des revendications 1 à 3, dans lequel un matériau absorbant les NO$_X$ qui libère les composants NO$_X$ absorbés sous la forme de NO$_2$ à une température supérieure à une température prédéterminée est supporté dans lesdits pores.

5. Filtre du type à écoulement sur parois destiné à purifier des gaz d'échappement selon l'une quelconque des revendications 1 à 4, dans lequel un matériau adsorbant les HC qui libère les HC adsorbés à une température supérieure à une température prédéterminée est appliqué sur les pores proches des entrées des gaz d'échappement dans le sens de l'épaisseur des parois poreuses ou sur les surfaces des parois poreuses dans les cellules sur le côté de l'entrée des gaz d'échappement.

6. Filtre du type à écoulement sur parois destiné à purifier des gaz d'échappement selon l'une quelconque des revendications 1 à 5, dans lequel un catalyseur d'oxydation est supporté sur les surfaces des parois poreuses des cellules du côté de la sortie des gaz d'échappement.

## Patentansprüche

1. Wandströmungsfilter zum Reinigen von Abgasen mit einer Anzahl von Zellen, die in einer Strömungsrichtung der Abgase ausgebildet sind, wobei jede zweite Zelle an der Abgaseinlaßseite verschlossen ist, jedoch an der Abgasauslassseite geöffnet ist, und die Zellen, die an der Abgaseinlassseite geöffnet sind, an der Abgasauslaßseite verschlossen sind, und wobei ein Katalysator in den Poren, die innerhalb der porösen Wände zwischen den Zellen ausgebildet sind, aufgenommen ist und die Poren einen Durchmesser haben, der von ungefähr 25 bis ungefähr 40 $\mu$m beträgt.

2. Wandströmungsfilter zum Reinigen von Abgasen nach Anspruch 1, wobei sich der Durchmesser der Poren von der Abgaseinlassseite zur Abgasauslaßseite hin in Dickerichtung der porösen Wände verringert.

3. Wandströmungsfilter zum Reinigen von Abgasen nach Anspruch 1 oder 2, wobei sich der Betrag des Trägers von der Abgaseinlassseite zur Abgasauslaßseite hin in Dickerichtung der porösen Wände erhöht.

4. Filter zum Reinigen von Abgasen nach einem der Ansprüche 1 bis 3, wobei ein NOx-absorbierendes Material, das $NO_X$-Komponenten freisetzt, die in Form von $NO_2$ bei einer Temperatur, die höher als eine vorbestimmte Temperatur ist, absorbiert wurden, in den Poren aufgenommen ist.

5. Wandströmungsfilter zum Reinigen von Abgasen nach einem der Ansprüche 1 bis 4, wobei ein HC-adsorbierendes Material, das den adsorbierten HC bei einer Temperatur, die höher als eine vorbestimmte Temperatur ist, freisetzt, auf die Poren nahe den Abgaseinlässen in Dickerichtung der porösen Wände oder auf die Oberflächen der porösen Wand in den Zellen an der Abgaseinlassseite aufgebracht ist.

6. Wandströmungsfilter zum Reinigen von Abgasen nach einem der Ansprüche 1 bis 5, wobei ein Oxidierkatalysator an den Oberflächen der porösen Wand der Zellen an der Abgasauslaßseite aufgenommen ist.

# Fig.1

## (a)

## (b)

IN

OUT

I

# Fig.2

# Fig.3

# Fig.4

# Fig.5

# Fig.6

# Fig.7